# FASCICULE DE BREVET EUROPEEN

(11) **EP 4 102 108 B1**
(45) Date de publication et mention de la délivrance du brevet: **29.10.2025**
(21) Numéro de dépôt: 22176064.8
(22) Date de dépôt: 30.05.2022
(51) Int. Cl.: F16H 57/04, F02C 7/36, F16H 57/08

(54) **PIÈCE MÉCANIQUE POUR UNE TURBOMACHINE D'AÉRONEF**
MECHANISCHES BAUTEIL FÜR TURBOTRIEBWERK EINES LUFTFAHRZEUGS
MECHANICAL PART FOR AN AIRCRAFT TURBINE ENGINE

(30) Priorité: 07.06.2021 FR 2105968
(43) Date de publication de la demande: 14.12.2022
(73) Titulaire: Safran Transmission Systems, 92700 Colombes (FR)
(72) Inventeur: MARCOS IZQUIERDO, Juan-Luis, 77550 MOISSY-CRAMAYEL (FR)
(74) Mandataire: Gevers & Orès

(56) Documents cités:
- JP-A- 2011 112 145
- JP-A- 2011 185 322
- US-A1- 2020 309 032

## Description

### Domaine technique de l'invention

La présente invention concerne une pièce mécanique pour une turbomachine d'aéronef, et en particulier une pièce destinée à assurer un écoulement d'huile en fonctionnement.

### Aval-plan technique

L'état de l'art comprend notamment les documents JP-A-2011 112145, JP-A-2011 185322, US-A1-2020/309032, WO-A1-2010/092263, FR-A1-2 987 416, FR-A1-3 041 054 et FR-A1-3 076 853.

Une turbomachine d'aéronef consomme notamment de l'huile pour fonctionner. Cette huile est par exemple nécessaire pour assurer la lubrification de pièces mécaniques, telles que des paliers ou des engrenages, et peut également être utilisée pour refroidir ces pièces. Certaines pièces mécaniques d'une turbomachine d'aéronef comportent des surfaces profilées pour assurer un écoulement d'huile en fonctionnement. C'est par exemple le cas des déflecteurs ou collecteurs d'huile d'un réducteur mécanique.

Le rôle d'un réducteur mécanique est de modifier le rapport de vitesse et de couple entre l'axe d'entrée et l'axe de sortie d'un système mécanique.

Un réducteur mécanique comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- sur un réducteur planétaire, le porte-satellites est fixe et la couronne constitue l'arbre de sortie du dispositif qui tourne dans le sens inverse du solaire.
- sur un réducteur épicycloïdal, la couronne est fixe et le porte-satellites constitue l'arbre de sortie du dispositif qui tourne dans le sens que le solaire.
- sur un réducteur différentiel, aucun élément n'est fixé en rotation. La couronne tourne dans le sens contraire du solaire et du porte-satellites. Les réducteurs peuvent être composés d'un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron.

Les engrènements des réducteurs sont lubrifiés par de l'huile. L'huile de lubrification est chauffée en fonctionnement car elle absorbe de l'énergie calorifique générée par le réducteur. La température de l'huile a un impact sur sa viscosité et sur son efficacité de lubrification. Il est donc important d'évacuer l'huile chaude après la lubrification du réducteur, afin de la recycler.

Cependant, une fois lubrifiés, les satellites du réducteur projettent de l'huile chaude par centrifugation aux satellites voisins. Cette recirculation d'huile a plusieurs inconvénients : augmentation des pertes par ventilation du réducteur, augmentation de la température des satellites, réduction de la marge au grippage, augmentation de la température de sortie d'huile pour le dimensionnement des échangeurs, taux d'air dans l'huile plus important, consommation d'huile plus importante ce qui diminue le niveau bas d'huile dans le réservoirs d'huile, etc.

Une solution à ce problème consiste à disposer des déflecteurs ou des collecteurs d'huile entre les satellites. Les déflecteurs ont pour but de dévier l'huile projetée vers des moyens d'évacuation et de recyclage de l'huile. Les collecteurs d'huile ont pour but de collecter l'huile projetée et de l'acheminer vers les moyens d'évacuation et de recyclage de l'huile.

Un collecteur d'huile de réducteur comprend en général un corps comportant deux surfaces latérales opposées configurées pour s'étendre en partie autour de satellites du réducteur, le collecteur pouvant comporter en outre une cavité interne de circulation d'huile reliée d'une part à des entrées d'huile situées sur les faces latérales, et d'autre part à au moins une sortie d'huile.

Ce collecteur doit évacuer efficacement l'huile sous peine de venir saturer d'huile l'espace entre les satellites et le collecteur. Ce phénomène a pour conséquence le barbotage des satellites et entraine les mêmes conséquences néfastes listées précédemment.

Il est donc important que l'huile s'écoule le plus rapidement possible sur les surfaces latérales des collecteurs et plus généralement sur les surfaces des pièces mécaniques configurées pour assurer un écoulement d'huile en fonctionnement. Une huile qui s'écoulerait trop lentement sur les surfaces risquerait en outre d'être perturbée par l'air de ventilation qui circule en fonctionnement dans le réducteur mécanique.

Ces pièces mécaniques sont en général réalisées en métal. Le coefficient d'étalement de l'huile sur une surface métallique est relativement important si bien que l'huile qui s'écoule sur une telle surface a tendance à s'étaler et sur la surface et à s'étaler sur cette surface. L'étalement de l'huile sur la surface est lié au caractère lipophile de la surface métallique.

La présente invention propose une solution simple, efficace et économique, qui permet de faciliter l'écoulement d'huile sur une pièce mécanique de turbomachine d'aéronef.

### Résumé de l'invention

L'invention concerne une pièce telle que définie à la revendication 1.

Le revêtement de surface permet de rendre hydrophobe et/ou lipophobe la surface d'écoulement de l'huile. Ceci permet de réduire le coefficient d'étalement de l'huile sur la surface et donc de favoriser la formation de gouttes par exemple plutôt que l'étalement de l'huile sur la surface qui forme alors un film. Ceci permet de faciliter l'écoulement de l'huile sur la surface qui ne « s'attache » pas à la surface et donc d'accélérer cet écoulement. L'accélération de l'huile sur la surface permet de limiter l'impact de l'air de ventilation sur cette huile. Elle peut permettre en outre d'accélérer l'évacuation d'huile et son recyclage et ainsi permettre de réduire la quantité d'huile consommée en fonctionnement de la turbomachine.

La pièce mécanique selon l'invention peut comprendre une ou plusieurs des caractéristiques suivantes, prises selon les revendications dépendantes:
- lesdites surfaces sont incurvées concaves ;
- ledit revêtement s'étend sur une partie seulement de ladite surface ;
- ledit revêtement s'étend sur la totalité de ladite surface ;
- la pièce comporte deux surfaces latérales opposées qui sont profilées et configurées pour assurer un écoulement d'huile en fonctionnement, chacune de ces surfaces latérales comprenant un revêtement hydrophobe et/ou lipophobe rendant ladite surface hydrophobe et/ou lipophobe;
- le revêtement hydrophobe et/ou lipophobe est du PTFE ;
- la pièce comporte une cavité interne de circulation d'huile.

L'invention concerne en outre un réducteur mécanique comportant une pièce mécanique telle que décrite ci-dessus et une turbomachine, en particulier d'aéronef comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une vue schématique partielle en coupe axiale d'un réducteur mécanique,
[Fig. 3] la figure 3 est une vue schématique en coupe transversale d'un réducteur mécanique,
[Fig. 4] la figure 4 est une vue schématique en perspective d'une pièce mécanique qui est un collecteur ou déflecteur d'un réducteur mécanique,
[Fig. 5] la figure 5 est une vue similaire à celle de la figure 4 et qui montre une pièce mécanique selon un premier mode de réalisation de l'invention,
[Fig. 6] la figure 6 est une vue similaire à celle de la figure 4 et qui montre une pièce mécanique selon un second mode de réalisation de l'invention,
[Fig. 7] la figure 7 est une vue très schématique d'exemples de texturation de surface pour une pièce mécanique, et
[Fig. 8] la figure 8 est une vue très schématique en coupe d'une pièce mécanique selon l'invention, dont des surfaces comportent des revêtements hydrophobes et/ou lipophobes.

### Description détaillée de l'invention

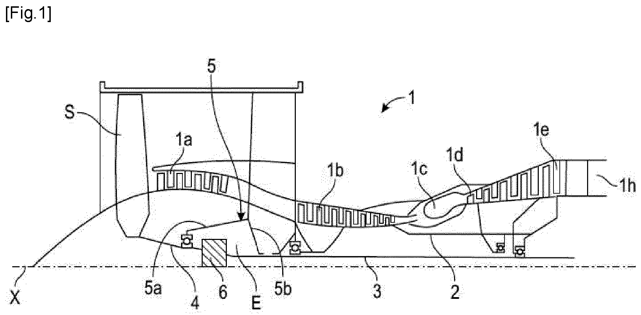

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

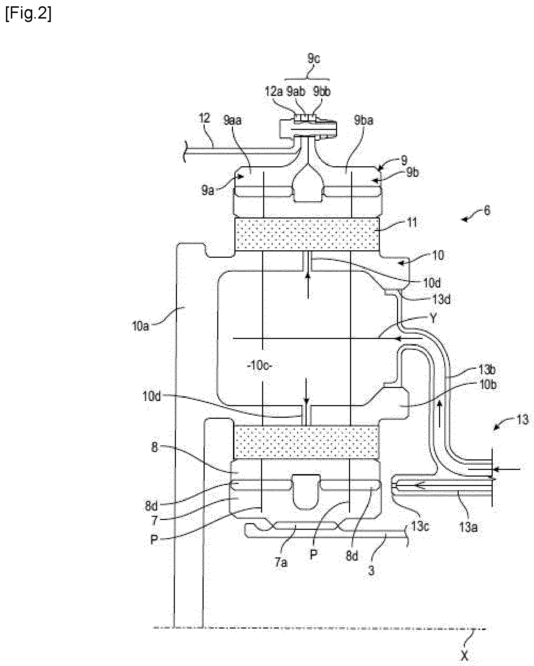

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application. L'ensemble des satellites 8 est maintenus par un châssis appelé porte-satellites 10. Chaque satellite 8 tourne autour de son propre axe Y, et engrène avec la couronne 9.

En sortie nous avons :
▪ dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ dans une configuration planétaire, l'ensemble des satellites 8 est maintenu par un porte-satellites 10 qui est fixé au carter moteur ou stator 5.

Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrostatique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture 8d d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
▪ une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
▪ une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval. Dans les autres figures, dans le cas d'un roulement à deux rangées de rouleaux, chaque rangée d'éléments roulants est aussi centrée sur deux plans médians.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

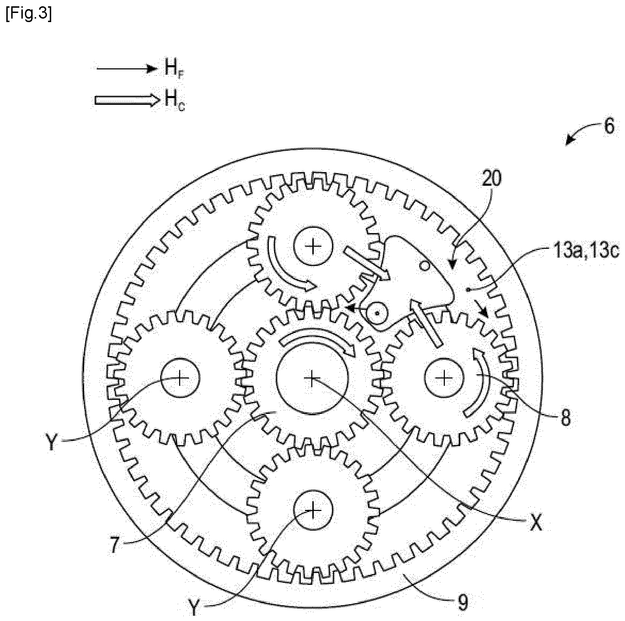

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers des injecteurs 13a pour ressortir par des extrémités 13c afin de lubrifier par de l'huile dite froide (H_{F}) les dentures des satellites 8, du solaire 7 et aussi de la couronne 9 (figure 3). L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

Du fait des forces centrifuges, de l'huile dite chaude Hc de lubrification des dentures est projetée radialement vers l'extérieur par rapport aux axes Y des satellites, comme cela est représenté à la figure 3. Pour éviter que cette huile perturbe la lubrification des satellites 8 adjacents, des collecteurs d'huile 20 sont disposés entre les satellites 8. Bien que la figure 3 représente un seul collecteur 20, le réducteur comprend un collecteur entre deux satellites adjacents et comprend donc autant de collecteurs que de satellites, à savoir quatre dans l'exemple représenté.

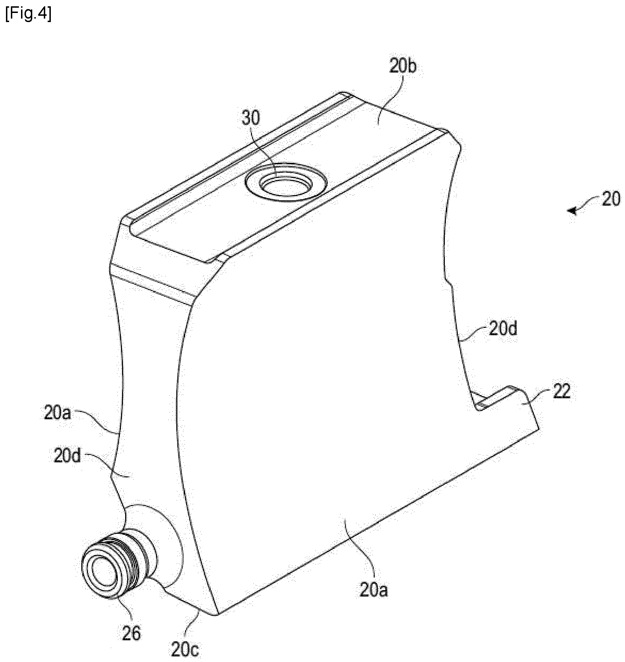

La figure 4 montre un exemple de réalisation d'un collecteur d'huile 20.

Le collecteur 20 comprend un corps, ici monobloc, qui comporte deux surfaces latérales 20a opposées destinées à s'étendre en partie autour de deux satellites 8 adjacents. Ces surfaces latérales 20a ont avantageusement une forme incurvée concave dont le rayon de courbure peut être centré sur l'axe Y de rotation du satellite 8 auquel cette surface 20a fait face.

Le collecteur 20 comprend en outre une face supérieure 20b ou radialement externe, ici plane, destinée à s'étendre en regard de la couronne 9 ou d'une paroi d'une cage dans le cas où le solaire 7 et les satellites 8 du réducteur 6 sont disposés dans une cage.

Le collecteur 20 comprend en outre une face inférieure 20c ou radialement interne, ici plane, destinée à s'étendre en regard du solaire 7.

Enfin, le collecteur 20 comprend deux faces 20d, respectivement amont et aval. Comme dans l'exemple représenté, l'une de ces faces 20d peut comprendre un organe 22 de fixation au réducteur.

La face 20d opposée du collecteur 20 peut comprendre une sortie commune d'huile 26 qui se présente par exemple sous la forme d'un embout tubulaire de raccordement fluidique. Cet embout peut être configuré pour traverser une lumière de la cage du réducteur par exemple. Le collecteur 20 comprend en outre une cavité interne (non visible) de circulation d'huile reliée à la sortie d'huile 26 ainsi qu'à au moins une entrée d'huile 30 située ici sur la face 20b.

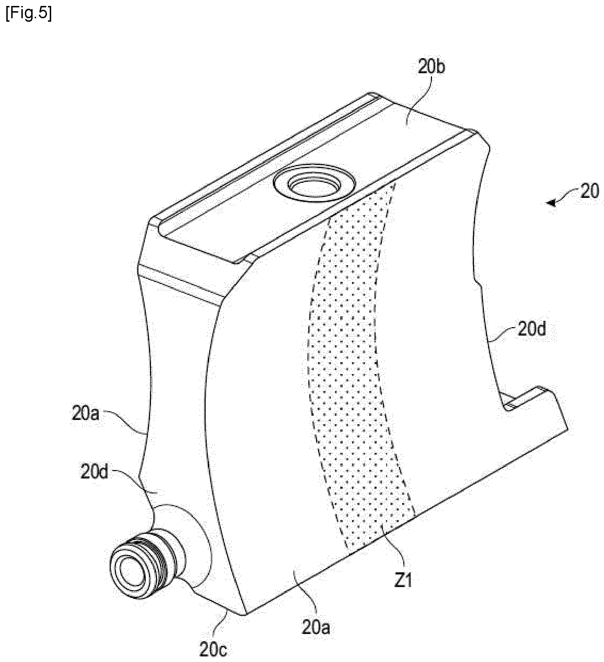

La figure 5 montre un premier mode de réalisation de l'invention dans lequel une partie de chaque surface 20d comprend un revêtement hydrophobe et/ou lipophobe rendant ladite surface hydrophobe et/ou lipophobe.

Dans la présente description, nous entendons par les termes « hydrophobe » et « lipophobe » (et voire « oléophobe »), la capacité d'une surface à repousser de l'eau et/ou de l'huile de ladite surface pour diminuer la surface de contact entre la surface et la goutte qui est formée. De telles propriétés permettent alors de diminuer le coefficient de friction. Le revêtement permet un coefficient de friction plus petit entre la surface de l'eau et/ou l'huile et la surface métallique avec le revêtement. Plus précisément encore, le caractère lipophobe et/ou hydrophobe permet au fluide (eau/huile/ graisse) de perler (forme des perles) lorsque celui-ci arrose la pièce mécanique, ce qui contribue a une bonne évacuation de ce fluide. De même, nous comprenons aussi par « plus lipophobe/hydrophobe » que la surface est moins lipophile/hydrophile, à savoir le fluide aura moins tendance à s'étaler/rester sur la surface.

Le revêtement s'étend sur une zone Z1 qui a une forme de bande allongée. Dans l'exemple représenté, la zone Z1 est située au milieu de chaque surface 20d et s'étend à distance des faces 20d et depuis la face 20c jusqu'à la face 20b.

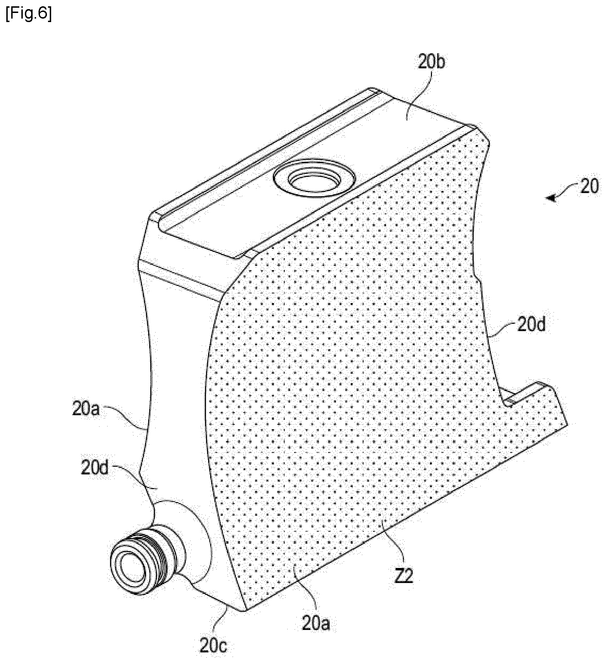

La figure 6 montre un second mode de réalisation de l'invention dans lequel la totalité de chaque surface 20d comprend un revêtement hydrophobe et/ou lipophobe. Ce revêtement s'étend ainsi sur une zone Z2 qui correspond à l'intégralité de chaque surface 20d. La zone Z2 s'étend jusqu'aux faces 20d et jusqu'aux faces 20c et 20b.

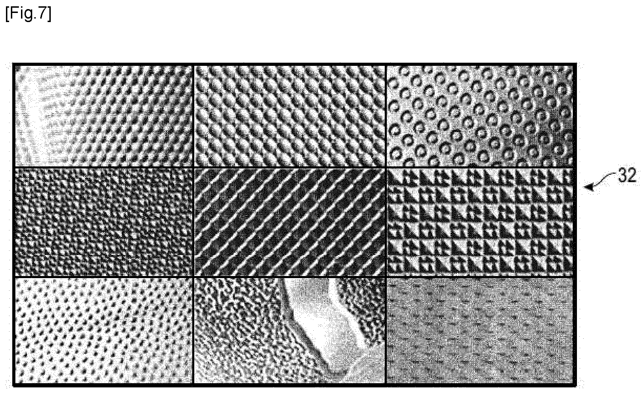

La figure 7 montre des exemples de texturation de surface 32 pour les zones Z1 et Z2, qui ne concernent pas l'invention.

La texturation de surface 32 comprend de préférence une répétition surfacique de motifs en creux ou bosses de dimensions micrométriques. Les motifs peuvent être linéaires ou ponctuels. Cette texturation 32 est par exemple réalisée par micro usinage laser. Les motifs en creux ou bosses permettent de diminuer l'aire de la surface en contact avec l'huile et ainsi de réduire la friction de l'huile avec la surface.

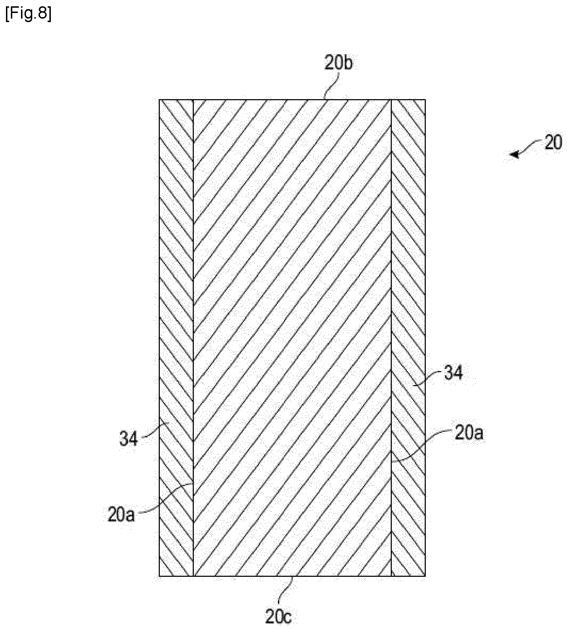

La figure 8 montre un exemple de revêtement 34 hydrophobe et/ou lipophobe pour les zones Z1 et Z2.

Le revêtement 34 est de préférence en polymère, et en particulier en PTFE. Il a par exemple une épaisseur comprise entre 1 et 100µm. Il peut être obtenu par pulvérisation d'une solution sur chaque surface 20d et chauffage en vue de la polymérisation et du durcissement du revêtement. Le revêtement 34 apporte les mêmes avantages évoqués plus haut.

## Revendications

1. Pièce mécanique pour une turbomachine d'aéronef, cette pièce mécanique étant réalisée en métal et comportant au moins une surface (20a) profilée configurée pour assurer un écoulement d'huile en fonctionnement, la pièce étant un déflecteur ou un collecteur d'huile (20) destiné à un réducteur mécanique (6), **caractérisée en ce que** ladite surface comprend un revêtement (34) en polymère plus hydrophobe et/ou lipophobe que ladite surface.

2. Pièce mécanique selon la revendication 1, dans laquelle ladite surface (20a) est incurvée concave.

3. Pièce mécanique selon la revendication 1 ou 2, dans laquelle ledit revêtement (34) s'étend sur une partie seulement de ladite surface (20a).

4. Pièce mécanique selon la revendication 1 ou 2, dans laquelle ledit revêtement (34) s'étend sur la totalité de ladite surface (20a).

5. Pièce mécanique selon l'une des revendications 1 à 4, comprenant deux surfaces latérales (20a) opposées qui sont profilées et configurées pour assurer un écoulement d'huile en fonctionnement, chacune de ces surfaces latérales comprenant un revêtement (34) hydrophobe et/ou lipophobe rendant ladite surface hydrophobe et/ou lipophobe.

6. Pièce mécanique selon l'une des revendications 1 à 5, dans laquelle le revêtement (34) hydrophobe et/ou lipophobe est du PTFE.

7. Pièce mécanique selon l'une des revendications 1 à 7, comprenant une cavité interne (28) de circulation d'huile.

8. Réducteur mécanique (6) pour une turbomachine d'aéronef, comportant un solaire (7), une couronne (9) s'étendant autour du solaire, des satellites (8) engrenés avec le solaire (7) et la couronne (9), et une pièce mécanique selon l'une des revendications précédentes, la pièce mécanique présentant ladite surface (20a) disposée en regard d'un satellite de sorte à former un déflecteur d'huile.

9. Turbomachine (1), en particulier d'aéronef, comportant un réducteur mécanique (6) selon la revendication 8.

## Patentansprüche

1. Mechanisches Stück für ein Turbotriebwerk eines Luftfahrzeugs, wobei das mechanische Stück aus Metall hergestellt ist und mindestens eine profilierte Oberfläche (20a) umfasst, die konfiguriert ist, um im Betrieb einen Ölfluss sicherzustellen, wobei das Stück ein Deflektor oder ein Ölsammler (20) für ein mechanisches Untersetzungsgetriebe (6) ist, **dadurch gekennzeichnet, dass** die Oberfläche eine Beschichtung (34) aus einem hydrophoberen und/oder lipophoberen Polymer als die Oberfläche beinhaltet.

2. Mechanisches Stück nach Anspruch 1, wobei die Oberfläche (20a) konkav gekrümmt ist.

3. Mechanisches Stück nach Anspruch 1 oder 2, wobei sich die Beschichtung (34) nur auf einem Teil der Oberfläche (20a) erstreckt.

4. Mechanisches Stück nach Anspruch 1 oder 2, wobei sich die Beschichtung (34) auf der Gesamtheit der Oberfläche (20a) erstreckt.

5. Mechanisches Stück nach einem der Ansprüche 1 bis 4, beinhaltend zwei gegenüberliegende seitliche Oberflächen (20a), die profiliert und konfiguriert sind, um im Betrieb einen Ölfluss sicherzustellen, wobei jede dieser seitlichen Oberflächen eine hydrophobe und/oder lipophobe Beschichtung (34) beinhaltet, die die Oberfläche hydrophob und/oder lipophob macht.

6. Mechanisches Stück nach einem der Ansprüche 1 bis 5, wobei die hydrophobe und/oder lipophobe Beschichtung (34) PTFE ist.

7. Mechanisches Stück nach einem der Ansprüche 1 bis 6, beinhaltend einen internen Hohlraum (28) zur Zirkulation von Öl.

8. Mechanisches Untersetzungsgetriebe (6) für ein Turbotriebwerk eines Luftfahrzeugs, umfassend ein Sonnenrad (7), eine Krone (9), die sich um das Sonnenrad herum erstreckt, Satelliten (8) in Eingriff mit dem Sonnenrad (7) und der Krone (9), und ein mechanisches Stück nach einem der vorstehenden Ansprüche, wobei das mechanische Stück die Oberfläche (20a) einem Satelliten derart gegenüber angeordnet aufweist, um einem Öldeflektor zu bilden.

9. Turbotriebwerk (1), insbesondere eines Luftfahrzeugs, das ein mechanisches Untersetzungsgetriebe (6) nach Anspruch 8 umfasst.

## Claims

1. A mechanical part for an aircraft turbomachine, this mechanical part being made of metal and comprising at least one profiled surface (20a) configured to ensure an oil flow during operation, the part being an oil deflector or collector (20) for a mechanical reduction gear (6), **characterized in that** said surface comprises a coating (34) made of polymer more hydrophobic and/or lipophobic than said surface.

2. The mechanical part of claim 1, wherein said surface (20a) is concave curved.

3. The mechanical part of claim 1 or 2, wherein said coating (34) extends over only a portion of said surface (20a).

4. The mechanical part according to claim 1 or 2, wherein said coating (34) extends over the entirety of said surface (20a).

5. The mechanical part according to any of claims 1 to 4, comprising two opposing side surfaces (20a) which are profiled and configured to ensure an oil flow during operation, each of these side surfaces comprising a hydrophobic and/or lipophobic coating (34) rendering said surface hydrophobic and/or lipophobic.

6. The mechanical part according to any of claims 1 to 5, wherein the hydrophobic and/or lipophobic coating (34) is made of PTFE.

7. The mechanical part according to any of claims 1 to 6, comprising an internal oil circulation cavity (28).

8. A mechanical reduction gear (6) for an aircraft turbomachine, comprising a sun gear (7), a ring gear (9) extending around the sun gear, planet gears (8) meshed with the sun gear (7) and the ring gear (9), and a mechanical part according to one of the preceding claims, the mechanical part having said surface (20a) arranged facing a planet gear so as to form an oil deflector.

9. A turbomachine (1), in particular for an aircraft, comprising mechanical reduction gear (6) according to claim 8.
